# EUROPÄISCHE PATENTSCHRIFT

(11) **EP 2 795 257 B1**
(45) Veröffentlichungstag und Bekanntmachung des Hinweises auf die Patenterteilung: **27.03.2019**
(21) Anmeldenummer: 12795380.0
(22) Anmeldetag: 20.11.2012
(51) Int. Cl.: G01C 21/36, G01C 21/32, G09B 29/10

(54) **SPEICHEREINRICHTUNG UND NAVIGATIONSSYSTEM**
MEMORY DEVICE AND NAVIGATION SYSTEM
DISPOSITIF DE MÉMOIRE ET SYSTÈME DE NAVIGATION

(30) Priorität: 21.12.2011 DE 102011089355
(43) Veröffentlichungstag der Anmeldung: 29.10.2014
(73) Patentinhaber: Bayerische Motoren Werke Aktiengesellschaft, 80809 München (DE)
(72) Erfinder: RICHTER, Werner, 82008 Unterhaching (DE)
(74) Vertreter: Mayer-Martin, Christian
(86) Internationale Anmeldenummer: PCT/EP2012/073024
(87) Internationale Veröffentlichungsnummer: WO 2013/092059

(56) Entgegenhaltungen:
- EP-A2- 0 419 248
- WO-A1-2010/111833
- WO-A1-2012/106283
- DE-T5-112009 001 358
- US-B1- 6 434 482

## Beschreibung

Die Erfindung betrifft ein Navigationssystem.

Mit Navigationssystemen ist es möglich, basierend auf einer elektronischen Straßenkarte nach verschiedenen Kriterien optimierte Routen zwischen einem Startpunkt und einem Zielpunkt zu berechnen. Dazu ist es vorgeschlagen, einzelnen digitalisierten Straßenabschnitten Kostenwerte (beispielsweise Fahrzeit, Fahrstrecke, Energieverbrauch, etc. oder beliebige darauf basierende Kombinationen) zuzuordnen und eine Route mit geringen oder minimalen Gesamtkosten zu bestimmen.

Teil der elektronischen Straßenkarte oder einer anderen mit dem Navigationssystem kommunikationstechnisch verbindbaren Speichereinrichtung sind häufig so genannte Points of Interest (POIs). Diese Ortsinformationsobjekte umfassen üblicherweise den Namen eines bestimmten Ortes, ggf. eine Kurzbeschreibung des Ortes und die geografischen Koordinaten des Ortes.

Es ist bekannt, durch ein Navigationssystem während der Fahrt in der Nähe von dem aktuellen Ort oder in der Nähe von der aktuellen Route liegende POIs anzuzeigen.

Die WO2010/111833 A1 offenbart die Anzeige des Abstandes zwischen einem Fahrzeug und der Ausfahrt zum nächstgelegenen POI sowie die Anzeige des Abstandes des POI von dieser Ausfahrt.

Es ist dabei ein Ziel, mit den POIs jeweils die Entfernung vom aktuellen Ort (aktuelle Fahrzeugposition oder aktuelle Position des Navigationssystems) zu den POIs anzugeben, insbesondere anzuzeigen. Die Entfernungsberechnung beruht dabei entweder auf der Luftlinie zwischen aktuellem Ort und POI oder auf der Straßenroute zu dem POI. Die erste Alternative ist sehr ungenau, die zweite Alternative sehr rechenintensiv, da hierfür aktuelle Routen vom aktuellen Ort zu allen anzuzeigenden POIs berechnet werden müssen.

Der Erfindung liegt nun die Aufgabe zugrunde, eine gegenüber dem Stand der Technik verbesserte technische Lehre anzugeben.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung beruht demnach auf dem Gedanken, mit den Ortsinformationsobjekten (POIs) jeweils eine Entfernung (beispielsweise basierend auf Luftlinie, schnellster Straßenroute oder kürzester Straßenroute) abzuspeichern, die zwischen dem POI und der Autobahnausfahrt, die dem POI am nächsten liegt (beispielsweise hinsichtlich Luftlinie, schnellster Straßenroute oder kürzester Straßenroute).

Eine Speichereinrichtung in dem erfindungsgemäßen Navigationssystem, wie beispielsweise eine Festplatte oder eine DVD, ist derart eingerichtet, dass auf ihr eine Vielzahl von Ortsinformationsobjekten, die jeweils einen Ort repräsentieren, abgespeichert ist, und dass den Ortsinformationsobjekten jeweils zugeordnet ein Entfernungsinformationsobjekt abgespeichert ist, das jeweils die Straßenentfernung (Entfernung, die auf einer, insbesondere kürzesten, schnellsten oder effizientesten, Route zurückzulegen ist) von dem Ort eines Ortsinformationsobjektes zu der dem Ort nächstliegenden (hinsichtlich Straßenentfernung oder Luftlinie) Autobahnausfahrt repräsentiert. Der Ort der Autobahnausfahrt kann dabei beispielsweise durch Koordinaten oder andere Parameter einer Position in der Nähe der entsprechenden Autobahnausfahrt bestimmt sein.

Dadurch wird erreicht, dass zur Berechnung einer Gesamtentfernung von einer aktuellen Position zu einem Ort eines Ortsinformationsobjektes nur die Straßenentfernung von der aktuellen Position zu der dem Ort nächstliegenden Autobahnausfahrt vergleichsweise aufwändig berechnet werden muss, die Gesamtentfernung sich dann aber einfach aus der Summe dieser berechneten Straßenentfernung und der dem Ortsinformationsobjekt zugeordneten, insbesondere zugeordnet abgespeicherten, Straßenentfernung ergibt.

Dadurch kann die Gesamtentfernung von einer aktuellen Position zu einem Ort eines Ortsinformationsobjektes genau und einfach, und damit schnell und mit geringer Rechenleistung, bestimmt werden. Dies ist insbesondere dann vorteilhaft, wenn Gesamtentfernungen zu einer Vielzahl von Orten verschiedener Ortsinformationsobjekte bestimmt werden sollen.

Es können neben dem Entfernungsinformationsobjekt, das jeweils die Straßenentfernung von dem Ort eines Ortsinformationsobjektes zu der dem Ort nächstliegenden Autobahnausfahrt repräsentiert, weitere Entfernungsinformationsobjekte dem Ortsinformationsobjekt zugeordnet abgespeichert sein, die jeweils vorzugsweise die Straßenentfernungen von dem Ort des Ortsinformationsobjektes zu einer weiteren dem Ort des Ortsinformationsobjektes nächstliegenden Autobahnausfahrt repräsentieren.

Vorzugsweise ist der Vielzahl von Ortsinformationsobjekten jeweils zumindest eine Autobahnausfahrtskennung (ID, Namen oder Koordinaten der Autobahnausfahrt) zugeordnet abgespeichert, durch welche die Autobahnausfahrt bestimmt wird, die zu dem Ort des Ortsinformationsobjektes am nächsten (beispielsweise hinsichtlich Straßenentfernung oder Luftlinie) liegt.

Vorzugsweise ist die Speichereinrichtung als elektronische Straßenkarte ausgeführt oder umfasst eine elektronische Straßenkarte, wobei den Ortsinformationsobjekten jeweils geografische Koordinaten zugeordnet sind. Dadurch wird auch die Routenführung zu dem Ort eines Ortsinformationsobjektes ermöglicht.

Eine bevorzugte Weiterbildung sieht vor, dass die Ortsinformationsobjekte jeweils einen Point of Interest (POI, Ort von besonderem Interesse, Sehenswürdigkeit) repräsentieren.

Ein erfindungsgemäßes Navigationssystem, das beispielsweise als Teil eines Kraftfahrzeuges oder eines Mobiltelefons ausgebildet ist, umfasst eine genannte Speichereinrichtung und eine Schnittstelle zum Zugriff auf die Speichereinrichtung, sowie eine Rechnereinrichtung.

Diese Rechnereinrichtung, wie beispielsweise eine programmgesteuerte Prozessoreinrichtung, ist derart ausgeführt oder eingerichtet, dass die Berechnung einer Gesamtentfernung zu einem durch ein Ortsinformationsobjekt repräsentierten Ort auf der Bildung einer Summe einer ersten Entfernung und einer zweiten Entfernung beruht.

Die erste Entfernung ist bestimmt durch die Straßenentfernung von dem aktuellen Ort (des Navigationssystems) zu der Autobahnausfahrt, die dem durch das Ortsinformationsobjekt repräsentierten Ort am nächsten liegt.

Die zweite Entfernung ist bestimmt durch das Entfernungsinformationsobjekt, das dem Ortsinformationsobjekt zugeordnet, insbesondere zugeordnet abgespeichert, ist.

Dadurch wird erreicht, dass für die Bestimmung einer Gesamtentfernung von einem aktuellen Ort zu einem Ort eines Ortsinformationsobjektes nur die Straßenentfernung (erste Entfernung) von dem aktuellen Ort zu der dem Ort nächstliegenden Autobahnausfahrt vergleichsweise aufwändig, aber in an sich bekannter Weise, berechnet werden muss. Die Gesamtentfernung ergibt sich dann aber einfach aus der Summe dieser berechneten Straßenentfernung und der dem Ortsinformationsobjektes zugeordnet abgespeicherten Straßenentfernung (zweite Entfernung).

Es ist eine Weiterbildung der Erfindung, dass die erste Entfernung abgeleitet wird von der durch das Navigationssystem aktuell bestimmten und ggf. verfolgten Route zu einem Fahrziel, das nicht Bestandteil der Ortsinformationsobjekte ist. Die erste Entfernung beruht vorzugsweise auf einer Teilroute der aktuell bestimmten Route. Die erste Entfernung kann dadurch mit geringerem Aufwand bestimmt werden.

Selbstverständlich liegt es im Rahmen der Erfindung, dass den Ortsinformationsobjekten jeweils neben den Entfernungen zwischen den Orten von Ortsinformationsobjekten und Autobahnausfahrten auch Entfernungen zwischen den Orten von Ortsinformationsobjekten und anderen markanten Orten, wie beispielsweise Kreuzungen, zugeordnet sind, und auch diese Entfernungen zur Gesamtentfernungsberechnung genützt werden. Ebenfalls selbstverständlich ist, dass neben den genannten Ortsinformationsobjekten auch Ortsinformationsobjekte vorgesehen sein können, denen kein Entfernungsinformationsobjekt zugeordnet ist.

Im Folgenden wird die Erfindung anhand von Beispielen näher erläutert.

Es wird von einem an sich bekannten Navigationssystem ausgegangen. Das Navigationssystem hat über eine Schnittstelle Zugriff auf eine Speichereinrichtung, auf der eine elektronische Straßenkarte abgespeichert ist. Bestandteil der elektronischen Straßenkarte ist eine Liste von POIs. Alternativ dazu ist es möglich, dass die Liste von POIs auf einer von der elektronischen Straßenkarte separat gebildeten Speichereinrichtung abgespeichert ist, auf welche das Navigationssystem oder die Prozessoreinrichtung des Navigationssystems über eine Funk- oder Leitungs-Kommunikationsverbindung zugreifen kann.

Einem Teil der POIs ist jeweils mindestens eine Entfernung zugeordnet, welche die Straßenentfernung auf einer schnellsten, kürzesten oder effizientesten Route von dem POI zu einer dem entsprechenden POI naheliegenden oder nächstliegenden Autobahnausfahrt angibt. Zudem sind einem oder dem Teil der POIs, insbesondere den Entfernungen eines POIs, jeweils mindestens eine Autobahnausfahrt-Kennung zugeordnet, welche angibt auf welche Autobahnausfahrt sich die Entfernung bezieht.

Das Navigationssystem ist derart ausgebildet, dass nach der Eingabe eines Fahrzieles und nach oder im Rahmen der Berechnung der Route von der aktuellen Position des Navigationssystems zu dem Fahrziel die Gesamtentfernungen von der aktuellen Position zu einer Teilmenge der auf der Speichereinrichtung abgespeicherten POIs berechnet werden. Die Teilmenge ist beispielsweise bestimmt durch die POIs, deren Entfernung (Straßenentfernung oder Luftlinie) zu der Route kleiner ist als eine vorgegebene Grenzentfernung, oder ist bestimmt durch die POIs, die in dem geografischen Gebiet der Route liegen.

Die Berechnung einer Gesamtentfernung von der aktuellen Position zu einem POI, insbesondere zum Ort eines POIs, beruht auf der Bildung einer Summe einer ersten Entfernung und einer zweiten Entfernung. Die erste Entfernung ist bestimmt durch die Straßenentfernung von dem aktuellen Ort zu der Autobahnausfahrt, die dem durch das Ortsinformationsobjekt repräsentierten Ort am nächsten liegt, und die daher dem POI zugeordnet abgespeichert ist. Die zweite Entfernung ist bestimmt durch die oben genannte Entfernung, die dem POI zugeordnet abgespeichert ist.

Nach oder im Zuge der Berechnung der Gesamtentfernungen zu der Teilmenge der POIs werden die Gesamtentfernungen einzeln oder zusammen, automatisch oder ausgelöst durch eine Bedienaktion, beispielsweise an einem Display des Navigationssystems, ausgegeben. Eine Gesamtentfernung zu einem POI kann mit der Annäherung des Navigationssystems an die zugehörige Autobahnausfahrt automatisch aktualisiert werden.

## Patentansprüche

1. Navigationssystem
- mit einer Speichereinrichtung die derart eingerichtet ist,
dass eine Vielzahl von Ortsinformationsobjekten, die jeweils einen Ort repräsentieren, abgespeichert ist, und
dass den Ortsinformationsobjekten jeweils zugeordnet ein Entfernungsinformationsobjekt abgespeichert ist, das jeweils die Straßenentfernung von dem Ort eines Ortsinformationsobjektes zu der dem Ort nächstliegenden Autobahnausfahrt repräsentiert,
- mit einer Schnittstelle zum Zugriff auf die Speichereinrichtung, und
- mit einer Rechnereinrichtung, die derart ausgeführt ist,
- dass die Berechnung einer Gesamtentfernung zu einem durch ein Ortsinformationsobjekt repräsentierten Ort auf der Bildung einer Summe einer ersten Entfernung und einer zweiten Entfernung beruht,
- wobei die erste Entfernung bestimmt ist durch die Straßenentfernung von dem aktuellen Ort zu der Autobahnausfahrt, die dem durch das Ortsinformationsobjekt repräsentierten Ort am nächsten liegt, und
- wobei die zweite Entfernung bestimmt ist durch das Entfernungsinformationsobjekt, das dem Ortsinformationsobjekt zugeordnet abgespeichert ist.

2. Navigationssystem nach Anspruch 1,
bei dem die Speichereinrichtung als elektronische Straßenkarte ausgeführt ist, wobei den Ortsinformationsobjekten jeweils geografische Koordinaten zugeordnet sind.

3. Navigationssystem nach einem der vorhergehenden Ansprüche, bei dem die Ortsinformationsobjekte jeweils einen POI repräsentieren.

## Claims

1. A navigation system
- with a storage device which is set up in such a way
that a large number of location information objects which in each case represent a location is stored, and
that associated in each case with the location information objects there is stored a distance information object which in each case represents the distance by road from the location of a location information object to the motorway exit closest to the location,
- with an interface for accessing the storage device, and
- with a computer means which is embodied in such a way,
- that the calculation of a total distance from a location represented by a location information object is based on the summing of a first distance and a second distance,
- wherein the first distance is determined by the distance by road from the current location to that motorway exit which is closest to the location represented by the location information object, and
- wherein the second distance is determined by the distance information object which is stored associated with the location information object.

2. A navigation system according to Claim 1,
in which the storage device is embodied as an electronic road map, with geographical coordinates in each case being associated with the location information objects.

3. A navigation system according to one of the preceding claims,
in which the location information objects in each case represent a POI.

## Revendications

1. Système de navigation comprenant :
un dispositif de mémoire qui est réalisé de sorte :
- qu'un ensemble d'objets d'information de localisation qui représentent chacun un lieu soit enregistré, et
- que soit enregistré un objet d'information de distance respectivement associé aux objets d'information de localisation qui représente respectivement la distance routière du lieu d'un objet d'information de localisation à la sortie d'autoroute la plus proche de ce lieu,
- une interface permettant d'accéder au dispositif de mémoire, et
- un dispositif de calcul qui est réalisé de sorte :
- que le calcul de la distance globale à un lieu représenté par un objet d'information de localisation soit basé sur la formation de la somme d'une première distance et d'une seconde distance,
- la première distance étant déterminée par la distance routière du lieu actuel à la sortie d'autoroute qui est la plus proche du lieu représenté par l'objet d'information de localisation, et
- la seconde distance étant déterminée par l'objet d'information de distance, associé à l'objet d'information de localisation qui est enregistré.

2. Système de navigation conforme à la revendication 1,
dans lequel, le dispositif de mémoire est réalisé sous la forme d'une carte routière électronique, aux objets d'information de localisation étant respectivement associées des coordonnées géographiques.

3. Système de navigation conforme à l'une des revendications précédentes,
dans lequel, les objets d'information de localisation représentent chacun un POI.
